# EUROPEAN PATENT APPLICATION

(11) **EP 4 696 789 A1**
(43) Date of publication of application: **18.02.2026**
(21) Application number: 25185231.5
(22) Date of filing: 25.06.2025
(51) Int. Cl.: C22B 1/00, C22B 7/00, C22B 15/00, C22B 26/12, H01M 10/54

(54) **MANUFACTURING METHOD FOR RECYCLED MATERIAL**

(30) Priority: 23.07.2024 JP 2024117812
(71) Applicant: Prime Planet Energy & Solutions, Inc., Chuo-ku, Tokyo 103-0022 (JP)
(72) Inventor: HOSOE, Kento, Tokyo, 103-0022 (JP)
(74) Representative: Kuhnen & Wacker Patent- und Rechtsanwaltsbüro PartG mbB

(57) **Abstract**

A manufacturing method for a recycled material that can easily obtain a copper foil as a recycled material from a lithium ion secondary battery is provided. The manufacturing method for a recycled material according to the present disclosure includes: a step of preparing a lithium ion secondary battery including a positive electrode, a negative electrode, and an electrolyte, the negative electrode including a copper foil and a negative electrode active material layer containing graphite as a negative electrode active material, in which a stage structure of the graphite is at least one stage selected from the group consisting of a stage 1, a stage 2, and a stage 3; a step of taking out the negative electrode from the lithium ion secondary battery; and a step of peeling the negative electrode active material layer from the copper foil by bringing the negative electrode and water into contact with each other.

## Description

### TECHNICAL FIELD

The present disclosure relates to a manufacturing method for a recycled material. The present disclosure specifically relates to a manufacturing method for a material recycled from a lithium ion secondary battery.

### BACKGROUND

Lithium ion secondary batteries have been widely used in various fields. In particular, from the viewpoint of sustainable development goals (SDGs), the demand for battery electric vehicles (BEVs) using the lithium ion secondary battery for a driving power source has increased recently.

On the other hand, in recent years, promotion of recycling of used lithium ion secondary batteries has been demanded from the viewpoint of SDGs. In view of this, various techniques to obtain reusable materials (in other words, recycled materials) from the used lithium ion secondary batteries have been developed (for example, see Patent Documents 1 to 5).

### CITATION LIST

### PATENT DOCUMENTS

[0003] Patent Document 1: Japanese Patent Application Publication No. 2015-26566
Patent Document 2: Japanese Translation of PCT International Application Publication No. 2023-525095
Patent Document 3: Japanese Patent No. 7220340
Patent Document 4: Japanese Patent Application Publication No. 2021-72157
Patent Document 5: Patent Application Publication No. 2013-101830

### SUMMARY

Here, if BEVs spread in a large scale, depletion of copper will be concerned. Therefore, it has been desired to develop a technique of being able to collect a copper foil, in particular, easily as a recycled material from the used lithium ion secondary battery. The conventional technique, however, is not enough to satisfy this demand.

In view of this, an object of the present disclosure is to provide a manufacturing method for a recycled material that can easily obtain a copper foil as a recycled material from a lithium ion secondary battery.

A manufacturing method for a recycled material according to the present disclosure includes a step of preparing a lithium ion secondary battery including a positive electrode, a negative electrode, and an electrolyte, the negative electrode including a copper foil and a negative electrode active material layer containing graphite as a negative electrode active material, in which a stage structure of the graphite is at least one stage selected from the group consisting of a stage 1, a stage 2, and a stage 3; a step of taking out the negative electrode from the lithium ion secondary battery; and a step of peeling the negative electrode active material layer from the copper foil by bringing the negative electrode and water into contact with each other.

With such a constitution, the manufacturing method for a recycled material that can easily obtain the copper foil as the recycled material from the lithium ion secondary battery can be provided.

### BRIEF DESCRIPTION OF THE DRAWINGS

FIG. 1 is a flowchart expressing each step of a manufacturing method for a recycled material according to one embodiment;
FIG. 2 is a longitudinal cross-sectional view schematically illustrating an internal structure of one example of a lithium ion secondary battery used in a manufacturing method for a recycled material according to one embodiment;
FIG. 3 is a schematic exploded view illustrating a structure of an electrode body of the lithium ion secondary battery illustrated in FIG. 2;
FIG. 4 is a schematic cross-sectional view of a negative electrode of the lithium ion secondary battery illustrated in FIG. 2;
FIG. 5 is a conceptual view of a stage structure of graphite; and
FIG. 6 is a schematic view for describing one example of a method for performing an active material layer peeling step.

### DETAILED DESCRIPTION

Embodiments of the present disclosure will hereinafter be described with reference to the drawings. Matters that are not mentioned in the present specification and that are necessary for the implementation of the present disclosure can be grasped as design matters of those skilled in the art based on the prior art in the relevant field. The present disclosure can be implemented on the basis of the contents disclosed in the present specification and common technical knowledge in the relevant field. Note that in the drawings below, the members and parts with the same operation are explained by being denoted by the same reference sign. In addition, the size relation (length, width, thickness, etc.) in each drawing does not necessarily reflect the actual size relation. Moreover, in the present specification, the numerical range expressed as "A to B" includes A and B.

It should be noted that the term "secondary battery" in this specification refers to an electrical energy storage device capable of being charged and discharged repeatedly. It should be noted that, in the present specification, the term "lithium ion secondary battery" refers to a secondary battery that uses lithium ions as a charge carrier and can be charged and discharged by transfer of charges accompanying with the lithium ions between positive and negative electrodes.

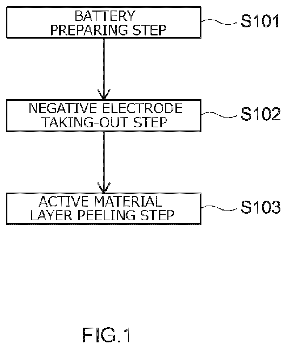

Each step of a manufacturing method for a recycled material according to this embodiment as one example of a manufacturing method for a recycled material according to the present disclosure is expressed in a flowchart of FIG. 1. As expressed in FIG. 1, the manufacturing method for a recycled material according to this embodiment essentially includes: a step (battery preparing step) S101 of preparing a lithium ion secondary battery including a positive electrode, a negative electrode, and an electrolyte, in which the negative electrode includes a copper foil and a negative electrode active material layer containing graphite as a negative electrode active material and a stage structure of the graphite is at least one stage selected from the group consisting of a stage 1, a stage 2, and a stage 3; a step (negative electrode taking-out step) S102 of taking out the negative electrode from the lithium ion secondary battery; and a step (active material layer peeling step) S103 of peeling the negative electrode active material layer from the copper foil by bringing the negative electrode and water into contact with each other. Each step will be described below in detail.

### 1. Battery preparing step S101

The lithium ion secondary battery prepared in the battery preparing step S101 is desirably a used lithium ion secondary battery. However, the lithium ion secondary battery prepared in the battery preparing step S101 is not limited to this and may be an unused lithium ion secondary battery that is not shipped because of being regarded as a defective product in the manufacture. Thus, a recycled material can be manufactured while the burden on the environment is reduced. Therefore, in the battery preparing step S101, for example, the used lithium ion secondary battery or the unused lithium ion secondary battery that is not shipped because of being regarded as a defective product in the manufacture is collected.

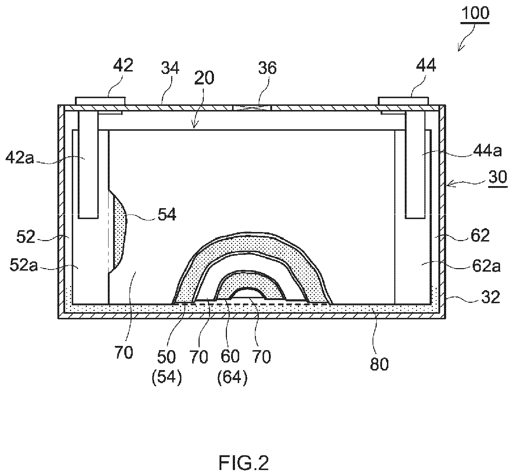

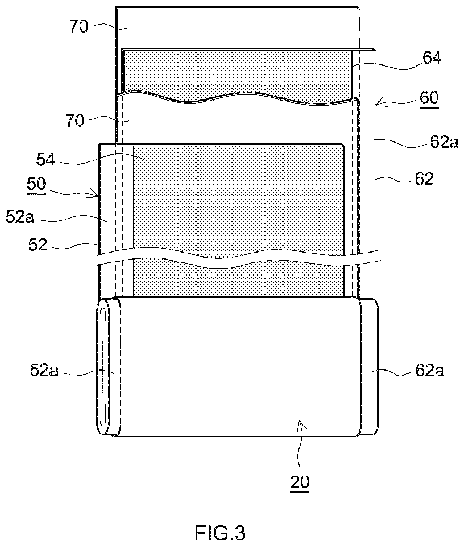

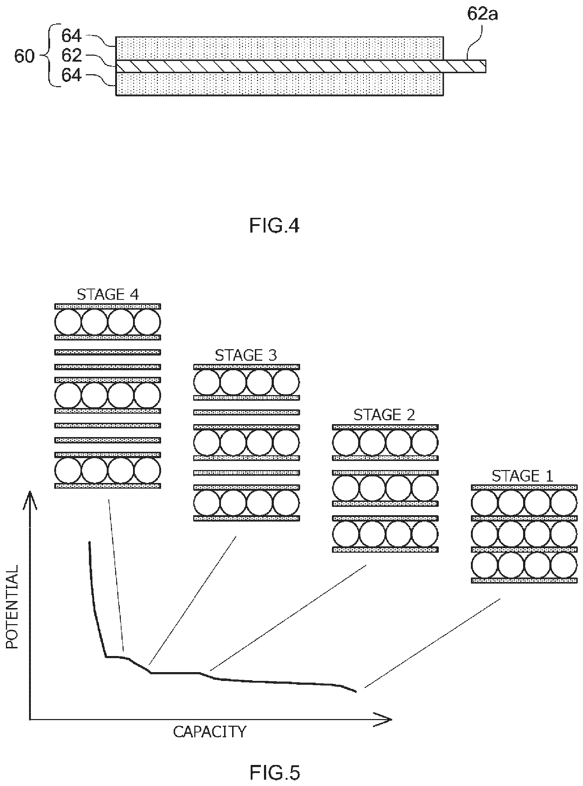

FIG. 2 and FIG. 3 illustrate an example of a structure of the lithium ion secondary battery. FIG. 2 is a longitudinal cross-sectional view schematically illustrating an internal structure of one example of the lithium ion secondary battery used in the manufacturing method for the recycled material according to this embodiment. FIG. 3 is an exploded view schematically illustrating an electrode body of the lithium ion secondary battery illustrated in FIG. 2. FIG. 4 is a schematic cross-sectional view of a negative electrode of the lithium ion secondary battery illustrated in FIG. 2 taken along a thickness direction.

As illustrated in FIG. 2, a lithium ion secondary battery 100 is a square sealed battery constructed in such a way that an electrode body 20 with a flat shape and a nonaqueous electrolyte (not illustrated) are accommodated inside a battery case 30. The battery case 30 includes a positive electrode terminal 42 and a negative electrode terminal 44 for external connection. In addition, the battery case 30 includes a thin safe valve 36 that is set to, when the internal pressure of the battery case 30 has risen to or above a predetermined level, release the internal pressure. The battery case 30 includes an injection port (not illustrated) for injecting a nonaqueous electrolyte. The positive electrode terminal 42 is electrically connected to a positive electrode current collection plate 42a. The negative electrode terminal 44 is electrically connected to a negative electrode current collection plate 44a.

As illustrated in FIG. 2, the battery case 30 includes an exterior body 32 that accommodates the electrode body 20, and a lid body 34 that seals an opening of the exterior body 32. The exterior body 32 and the lid body 34 are welded to be sealed by laser welding or the like. As a material of the battery case 30, a metal material with small weight and high thermal conductivity, such as aluminum, is used, for example.

In this embodiment, the battery case 30 is square in shape. The shape of the battery case 30 is, however, not limited to this shape and may be a cylindrical shape, for example. Alternatively, the battery case 30 may be a laminate case including, for example, a gas barrier layer such as an aluminum layer and a sealant layer including a thermoplastic resin. The battery case 30 may be made of resin.

As illustrated in FIG. 2 and FIG. 3, the electrode body 20 is in a form in which a positive electrode sheet 50 in an elongated shape and a negative electrode sheet 60 in an elongated shape are overlapped on each other with two elongated separator sheets 70 interposed therebetween and wound in a longitudinal direction. Therefore, in this embodiment, the electrode body 20 is a wound electrode body. The electrode body 20 is, however, not limited to this and may be a stacked-type electrode body in which a plurality of positive electrodes and a plurality of negative electrodes are stacked alternately through a separator.

As illustrated in FIG. 3 and FIG. 4, the negative electrode sheet 60 has a structure in which a negative electrode active material layer 64 is formed along the longitudinal direction on one surface or both surfaces (here, both surfaces) of a negative electrode current collector 62 in an elongated shape. The negative electrode active material layer 64 is supported by the negative electrode current collector 62. Therefore, the negative electrode current collector 62 and the negative electrode active material layer 64 are in contact with each other. The negative electrode sheet 60 includes a negative electrode active material layer non-formation part 62a, which is a part where the negative electrode active material layer 64 is not formed and the negative electrode current collector 62 is exposed.

Similarly, the positive electrode sheet 50 has a structure in which a positive electrode active material layer 54 is formed along the longitudinal direction on one surface or both surfaces (here, both surfaces) of a positive electrode current collector 52 in an elongated shape. The positive electrode sheet 50 includes a positive electrode active material layer non-formation part 52a, which is a part where the positive electrode active material layer 54 is not formed and the positive electrode current collector 52 is exposed.

The positive electrode active material layer non-formation part 52a and the negative electrode active material layer non-formation part 62a are formed so as to protrude outward from opposite ends of the wound electrode body 20 in a winding axis direction (that is, a sheet width direction that is orthogonal to the longitudinal direction). To the positive electrode active material layer non-formation part 52a and the negative electrode active material layer non-formation part 62a, the positive electrode current collection plate 42a and the negative electrode current collection plate 44a are joined, respectively.

The negative electrode current collector 62 of the negative electrode sheet 60 is a copper foil in this embodiment. The thickness of the copper foil is not limited in particular, and is for example 5 µm or more and 35 µm or less and desirably 7 µm or more and 20 µm or less.

The negative electrode active material layer 64 contains a negative electrode active material. In this embodiment, graphite is used as the negative electrode active material. Graphite may be either natural graphite or artificial graphite, and may be amorphous carbon coated graphite in which graphite is covered with an amorphous carbon material.

A median diameter (D50) of graphite is not limited in particular, and is, for example, 0.1 µm or more and 50 µm or less, desirably 1 µm or more and 25 µm or less, and more desirably 5 µm or more and 20 µm or less. It should be noted that the median diameter (D50) of graphite can be determined by a laser diffraction scattering method, for example.

The negative electrode active material layer 64 can include a component other than graphite, such as a binder or a thickener. Examples of the binder include styrene butadiene rubber (SBR), polyvinylidene fluoride (PVDF), and the like. Examples of the thickener include carboxymethyl cellulose (CMC) and the like. In addition, the negative electrode active material layer 64 may further include a negative electrode active material other than graphite within the range not impairing the effect of the present disclosure. The negative electrode active material desirably consists only of graphite.

The content of graphite in the negative electrode active material layer 64 is desirably 90 mass% or more, and more desirably 95 mass% or more and 99 mass% or less. The content of the binder in the negative electrode active material layer 64 is desirably 0.1 mass% or more and 8 mass% or less, and more desirably 0.5 mass% or more and 3 mass% or less. The content of the thickener in the negative electrode active material layer 64 is desirably 0.3 mass% or more and 3 mass% or less, and more desirably 0.5 mass% or more and 2 mass% or less.

As the positive electrode current collector 52 in the positive electrode sheet 50, a known positive electrode current collector that is used for the lithium ion secondary battery may be used and examples thereof include an aluminum foil and the like.

The positive electrode active material layer 54 contains a positive electrode active material. Examples of the positive electrode active material include lithium metal composite oxides (for example, lithium manganese composite oxides, lithium nickel manganese composite oxides, lithium nickel cobalt manganese composite oxides, lithium nickel cobalt aluminum composite oxides, and the like), and lithium transition metal phosphate compounds (for example, lithium iron phosphate and the like). The positive electrode active material layer 54 may include a conductive material, a binder, or the like. Desired examples of the conductive material include carbon black such as acetylene black (AB), carbon nanotube, and the like. As the binder, for example, polyvinylidene fluoride (PVDF) or the like can be used.

As the separator 70, a known separator that is used for the lithium ion secondary battery may be used, and examples thereof include porous sheets made of resin such as polyethylene (PE) or polypropylene (PP). Such porous sheets may have a single-layer structure or a multilayer structure. The separator 70 may have a heat resistance layer (HRL) provided on a surface thereof.

As the nonaqueous electrolyte, a known nonaqueous electrolyte that is used for the lithium ion secondary battery may be used, and typically, the nonaqueous electrolyte contains a nonaqueous solvent and a supporting salt (in other words, electrolyte salt). Examples of the nonaqueous solvent include carbonates, esters, ethers, and the like. Examples of the supporting salt include a lithium salt such as LiPF₆ and the like. The nonaqueous electrolyte may contain various kinds of additives such as a gas generating agent, a film forming agent, a dispersant, and a thickener. It should be noted that although the nonaqueous electrolyte is used as the electrolyte in this embodiment, the electrolyte may be a solid electrolyte.

The lithium ion secondary battery 100 is desirably used for vehicles (that is, for a driving power source of a vehicle such as a battery electric vehicle (BEV), a hybrid electric vehicle (HEV), or a plug-in hybrid vehicle (PHEV)); however, the application of the lithium ion secondary battery 100 is not limited to this. The lithium ion secondary battery 100 may be used for a power source of an electronic appliance or the like.

Here, in the case where graphite is used as the negative electrode active material of the lithium ion secondary battery, lithium ions are stored between layers of a layer structure of graphite when the lithium ion secondary battery is charged. At this time, it is known that graphite has a stage structure to store the lithium ions regularly between particular layers. In this embodiment, graphite has a specific stage structure in the lithium ion secondary battery prepared in the battery preparing step S101. This will be described using FIG. 5. FIG. 5 is a conceptual view of the stage structure of graphite, and also shows a graph in which negative electrode capacity (capacity per unit weight of negative electrode: mAh/g) is expressed along a horizontal axis and a negative electrode potential with respect to lithium metal is expressed along a vertical axis.

In the diagram above the graph in FIG. 5, a lateral line represents each layer of graphite and a circle represents a lithium ion. Graphite has four kinds of stage structures that are classified into stages 1 to 4. In the stage 1, the lithium ions are stored between each layer of graphite. In the stage 2, there is one layer (i.e., empty region between the adjacent graphite layers) in which the lithium ions are not stored between two layers in which the lithium ions are stored. In the stage 3, there are two layers in which the lithium ions are not stored between two layers in which the lithium ions are stored. In the stage 4, there are three layers in which the lithium ions are not stored between two layers in which the lithium ions are stored. As illustrated in FIG. 5, as the negative electrode capacity of the lithium ion secondary battery increases, that is, as the charging progresses, the stage structure of graphite changes from a non-charged state to the stage 4, a state in which the stage 4 and the stage 3 co-exist is obtained, the stage 3 is obtained, a state in which the stage 3 and the stage 2 co-exist is obtained, the stage 2 is obtained, a state in which the stage 2 and the stage 1 co-exist is obtained, and the stage 1 is obtained.

Here, in the lithium ion secondary battery 100 prepared in the battery preparing step S101, the stage structure of graphite is at least one stage selected from the group consisting of the stage 1, the stage 2, and the stage 3. It should be note that the stage structure of graphite may be the state in which the stage 3 and the stage 2 co-exist or the state in which the stage 2 and the stage 1 co-exist. The lithium ion secondary battery in which the stage structure of graphite is the state in which the stage 4 and the stage 3 co-exist does not correspond to the lithium ion secondary battery 100 prepared in the battery preparing step S101. In a case where the stage structure of graphite of the lithium ion secondary battery 100 is known, the lithium ion secondary battery 100 may be selected in accordance with the stage structure. In a case where the stage structure of graphite of the lithium ion secondary battery 100 is unknown, the stage structure of graphite is checked. This will be described below.

The results of Examples and Comparative Examples to be described below indicate that the stage structure of graphite when the negative electrode potential (based on lithium metal, which applies similarly to the description below) was 220 mV (vs. Li⁺/Li) was the stage 4 and the stage structure of graphite when the negative electrode potential was 180 mV was the stage 3. The stage structures of graphite when the negative electrode potentials were 130 mV, 110 mV, 80 mV, and 60 mV were the stage 2, the stage 2, the stage 1, and the stage 1, respectively.

In view of the above, in the battery preparing step S101, whether the potential of the negative electrode 60 of the lithium ion secondary battery 100 is 180 mV or less based on lithium metal may be checked. When the potential of the negative electrode 60 of the lithium ion secondary battery 100 is 180 mV or less, the stage structure of graphite is any of the stage 1, the stage 2, and the stage 3. This checking may be performed by a known method, specifically in such a way that metal lithium is inserted into the lithium ion secondary battery 100 as a reference electrode and a known potential measuring device is used.

Alternatively, as illustrated in FIG. 5, the stage structure of graphite is in relation with the capacity of the negative electrode of the lithium ion secondary battery (that is, state of charge (SOC)). In view of this, the stage structure of graphite may be checked by checking the SOC of the lithium ion secondary battery 100.

Alternatively, in the battery preparing step S101, the state of charge of the lithium ion secondary battery 100 may be adjusted so that the stage structure of graphite becomes at least one stage selected from the group consisting of the stage 1, the stage 2, and the stage 3. Specifically, for example, the state of charge of the lithium ion secondary battery 100 may be adjusted so that the potential of the negative electrode 60 of the lithium ion secondary battery 100 becomes 180 mV or less based on lithium metal. The state of charge can be checked and adjusted in accordance with a known method and for example, by using a known charging/discharging device.

The state of charge may be adjusted for all the lithium ion secondary batteries 100. Alternatively, the potential of the negative electrode 60 may be checked, and the state of charge may be adjusted for only the lithium ion secondary batteries 100 in which the potential of the negative electrode 60 is more than 180 mV. Alternatively, the SOC of the lithium ion secondary batteries may be checked and the state of charge may be adjusted for only those in which the stage structure of graphite is the stage 4 or which are not charged.

It should be noted that in the case of recycling the material of the lithium ion secondary battery, generally, the lithium ion secondary battery is fully discharged from the viewpoint of safe disassembling. In the case where the lithium ion secondary battery is fully discharged, the lithium ions do not exist between the layers of graphite; therefore, graphite does not have any stage structure of the stage 1, the stage 2, the stage 3, and the stage 4. Therefore, in the case where the stage structure of graphite is the stage 1, the stage 2, or the stage 3, the lithium ion secondary battery 100 is in the charged state to some extent.

In this manner, the lithium ion secondary battery 100 in which the stage structure of graphite is at least one stage selected from the group consisting of the stage 1, the stage 2, and the stage 3 can be prepared.

### 2. Negative electrode taking-out step S102

The negative electrode taking-out step S 102 can be performed in accordance with a known method. In a specific example, first, the battery case 30 of the lithium ion secondary battery 100 is opened to expose the electrode body 20. The battery case 30 can be opened in such a way that, for example, a part of the exterior body 32 that is a little lower than the lid body 34 is cut using a tool with a cutting blade (for example, a sawing machine or the like), an electric cutting tool (for example, a grinder, a Leutor, or the like), or a cutter such as a water cutter or a laser cutter.

Next, the exposed electrode body 20 is taken out and the negative electrode 60 is retrieved from the electrode body 20. For example, first, the positive electrode active material layer non-formation part 52a and the negative electrode active material layer non-formation part 62a of the electrode body 20 are detached from the positive electrode current collection plate 42a and the negative electrode current collection plate 44a, respectively. Next, in the case where the electrode body 20 is the wound electrode body as illustrated in the drawing, for example, the wound electrode body 20 is unfastened and separated into the positive electrode 50, the negative electrode 60, and the separator 70. In the case where the electrode body 20 is the stacked-type electrode body, the electrode body 20 is sorted into the positive electrode 50 and the separator 70, and the negative electrode 60. In this manner, the **negative** electrode 60 can be taken out by the negative electrode taking-out step S102.

### 3. Active material layer peeling step S103

In this step, the negative electrode 60 is brought into contact with water. In the negative electrode 60, graphite is in the state of the stage 1, the stage 2, or the stage 3 in which the lithium ions exist between the layers of graphite. Here, water and graphite having the lithium ions between the layers react in accordance with the following Formula (I):

2C₆Li + 2H₂O → 2C₆ + 2LiOH + H₂ (I)

Therefore, the lithium ions are sequentially released from between the layers of graphite and react with water; thus, the interlayer distance becomes smaller. This results in a rapid volume contraction of graphite. The volume change at this time can be about 10%. By the stress due to this rapid volume contraction of graphite, the negative electrode active material layer 64 is peeled off from the negative electrode current collector 62, that is, from the copper foil. In this manner, the negative electrode active material layer 64 and the copper foil can be separated from each other easily. It should be noted that when graphite is in the stage 4, the amount of lithium ions is small and therefore, this volume contraction is small and the sufficient stress is not obtained.

The active material layer peeling step S103 can be performed by, for example, preparing a container, a tank, or the like containing water and immersing the negative electrode 60 in water. At this time, stirring may or may not be performed.

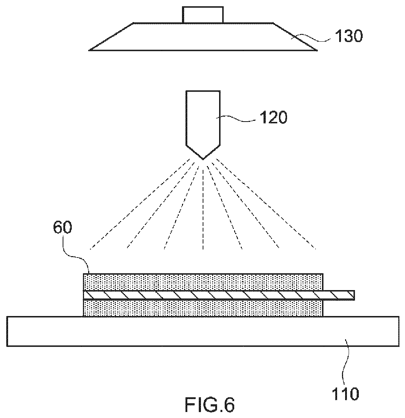

In another example, the active material layer peeling step S103 can be performed by spraying water to the negative electrode 60. This is described specifically using FIG. 6.

As illustrated in FIG. 6, a table 110 and a spraying device 120 over the table 110 are prepared. The table 110 may be a movable belt conveyer or the like because of being able to bring the negative electrode 60 and water into contact with each other continuously. Water is supplied to the spraying device 120. The negative electrode 60 is located on the table 110 and water is sprayed to the negative electrode 60 from the spraying device 120. Here, the negative electrode active material layer 64 can be peeled off from the copper foil even when the amount of water is small. Therefore, the amount of spraying water from the spraying device 120 is about 20 mm/hour to 30 mm/hour.

In the active material layer peeling step S103, it is advantageous to collect hydrogen generated by the contact between the negative electrode 60 and water. Hydrogen can be used as fuel of a fuel cell, for example. Hydrogen can be collected in accordance with a known method. In the example illustrated in FIG. 6, a hood of a hydrogen collecting device 130 is installed above the spraying device 120 and hydrogen can be collected by the hydrogen collecting device 130.

In the active material layer peeling step S103, it is advantageous to collect lithium hydroxide (LiOH) generated by the contact between the negative electrode 60 and water. Lithium hydroxide is normally dissolved in water that is in contact with the negative electrode 60. Therefore, lithium hydroxide can be obtained as a recycled material by collecting water that is in contact with the negative electrode 60 and evaporating the collected water, for example.

After the negative electrode 60 and water are brought into contact with each other, the negative electrode active material layer 64 or the copper foil may be dried in order to remove water. The obtained copper foil may be further cleaned or purified, for example.

By performing the active material layer peeling step S103, the copper foil can be obtained easily as the recycled material. By performing the active material layer peeling step S103, the negative electrode active material layer 64 can be obtained at the same time. Graphite can be obtained as the recycled material from the negative electrode active material layer 64 in accordance with a known method. In the case of using the binder, the thickener, or the like, the binder, the thickener, or the like can be obtained as the recycled material from the negative electrode active material layer 64 in accordance with a known method. Therefore, the manufacturing method for the recycled material according to this embodiment is useful in the material recycling.

Test examples related to the present disclosure are hereinafter described in detail but these test examples are not intended to limit the present disclosure to such examples.

### [Manufacture of evaluation battery]

Graphite (C), styrene butadiene rubber (SBR), and carboxymethyl cellulose (CMC) were mixed in an ion exchanged water at a mass ratio of C:SBR:CMC = 99:0.5:0.5, whereby a negative electrode slurry was prepared. This slurry was applied in a band shape on both surfaces of an elongated copper foil with a thickness of 8 µm and then dried, and the resultant was pressed, whereby a negative electrode sheet was manufactured.

LiNi_{1/3}Co_{1/3}Mn_{1/3}O₂ (LNCM), acetylene black (AB), and polyvinylidene fluoride (PVdF) were mixed in N-methyl pyrrolidone (NMP) at a mass ratio of LNCM:AB:PVdF = 92:5:3, whereby a positive electrode slurry was prepared. This slurry was applied in a band shape on both surfaces of an elongated aluminum foil with a thickness of 15 µm and then dried, and the resultant was pressed, whereby a positive electrode sheet was manufactured.

In addition, two porous polyolefin sheets each having a three-layer structure of PP/PE/PP in which HRL was provided were prepared as the separator. The positive electrode sheet manufactured as described above, the negative electrode sheet manufactured as described above, and the two prepared separator sheets were stacked and wound, and then squashed by being pressed from a side surface direction, whereby the wound electrode body with a flat shape was manufactured.

Next, the positive electrode terminal and the negative electrode terminal were connected to the wound electrode body and these were accommodated in the square battery case having an injection port. Subsequently, the nonaqueous electrolyte solution was injected through the injection port of the battery case and the injection port was airtightly sealed. It should be noted that the nonaqueous electrolyte solution was prepared in such a way that LiPF₆ as the supporting salt was dissolved at a concentration of 1.1 mol/L in a mixed solvent containing ethylene carbonate (EC), dimethyl carbonate (DMC), and ethyl methyl carbonate (EMC) at a volume ratio of EC:DMC:EMC = 3:3:4. After that, an initial charging process and an aging process were performed and thus, an evaluation lithium ion secondary battery was obtained.

### [Examples and Comparative Examples]

The state of charge of the evaluation lithium ion secondary battery was adjusted so that the negative electrode potential (based on lithium metal) shown in Table 1 was obtained. In Comparative Example 1, however, the evaluation lithium ion secondary battery was set to the non-charged state. The evaluation lithium ion secondary battery was disassembled in an argon atmosphere and the negative electrode was taken out. The retrieved negative electrode was dried and the weight was measured. Based on the measurement, the weight (a weight A) of the negative electrode active material layer included in the negative electrode was determined.

Next, the negative electrode was immersed in water for three minutes. The negative electrode was taken out and dried, and then the weight was measured. It should be noted that when the negative electrode active material layer was separated, the copper foil was taken out and dried, and then the weight was measured. Based on the measurement, the weight (a weight B) of the negative electrode active material layer adhering to the copper foil was determined. The peeling ratio was obtained from Expression: (1 - weight B/weight A) × 100. The results are shown in Table 1.

### [Table 1]

**Table 1**

| | Negative electrode potential (mV) | Graphite stage structure | Peeling ratio (%) |
|---|---|---|---|
| Comparative Example 1 | Not charged | | 2 |
| Comparative Example 2 | 800 | - | 54 |
| Comparative Example 3 | 500 | - | 61 |
| Comparative Example 4 | 300 | - | 58 |
| Comparative Example 5 | 220 | Stage 4 | 62 |
| Example 1 | 180 | Stage 3 | 97 |
| Example 2 | 130 | Stage 2 | 96 |
| Example 3 | 110 | Stage 2 | 98 |
| Example 4 | 80 | Stage 1 | 98 |
| Example 5 | 60 | Stage 1 | 97 |

As shown in the results of Table 1, it can be understood that when the stage structure of graphite is the stage 1, the stage 2, or the stage 3, bringing the negative electrode and water into contact with each other can peel the negative electrode active material layer from the copper foil at a high peeling ratio. Therefore, it can be understood that the manufacturing method for a recycled material according to the present disclosure can obtain the copper foil easily as the recycled material from the lithium ion secondary battery.

The specific examples of the present disclosure have been described above in detail; however, these are just examples and will not limit the scope of claims. The techniques described in the scope of claims include those in which the specific examples exemplified above are variously modified and changed.

That is to say, the following Items [1] to [8] are given as the manufacturing method for a recycled material according to the present disclosure.
[1] The manufacturing method for a recycled material, including: the step of preparing the lithium ion secondary battery including the positive electrode, the negative electrode, and the electrolyte, the negative electrode including the copper foil and the negative electrode active material layer containing graphite as the negative electrode active material, in which the stage structure of the graphite is at least one stage selected from the group consisting of the stage 1, the stage 2, and the stage 3; the step of taking out the negative electrode from the lithium ion secondary battery; and the step of peeling the negative electrode active material layer from the copper foil by bringing the negative electrode and water into contact with each other.
[2] The manufacturing method according to Item [1], in which the recycled material is the copper foil.
[3] The manufacturing method according to Item [1] or [2], in which in the step of peeling, the negative electrode and the water are brought into contact with each other by spraying the water to the negative electrode.
[4] The manufacturing method according to any one of Items [1] to [3], in which the step of peeling includes collecting hydrogen generated by the contact between the negative electrode and the water.
[5] The manufacturing method according to any one of Items [1] to [4], in which the step of peeling includes collecting lithium hydroxide generated by the contact between the negative electrode and the water.
[6] The manufacturing method according to any one of Items [1] to [5], in which the step of preparing the lithium ion secondary battery includes checking whether the potential of the negative electrode of the lithium ion secondary battery is 180 mV or less based on lithium metal.
[7] The manufacturing method according to any one of Items [1] to [6], in which the step of preparing the lithium ion secondary battery includes adjusting the state of charge of the lithium ion secondary battery so that the stage structure of the graphite becomes at least one stage selected from the group consisting of the stage 1, the stage 2, and the stage 3.
[8] The manufacturing method according to any one of Items [1] to [7], in which the step of preparing the lithium ion secondary battery includes collecting the used lithium ion secondary battery or the unused lithium ion secondary battery that is not shipped because of being regarded as the defective product in the manufacture.

## Claims

1. A manufacturing method for a recycled material, comprising:
a step (S101) of preparing a lithium ion secondary battery (100) including a positive electrode (50), a negative electrode (60), and an electrolyte, the negative electrode (60), including a copper foil and a negative electrode active material layer (64) containing graphite as a negative electrode active material, wherein a stage structure of the graphite is at least one stage selected from the group consisting of a stage 1, a stage 2, and a stage 3;
a step (S102) of taking out the negative electrode (60), from the lithium ion secondary battery (100); and
a step (S103) of peeling the negative electrode active material layer (64) from the copper foil by bringing the negative electrode (60), and water into contact with each other.

2. The manufacturing method according to claim 1, wherein the recycled material is the copper foil.

3. The manufacturing method according to claim 1, wherein in the step (S103) of peeling, the negative electrode (60), and the water are brought into contact with each other by spraying the water to the negative electrode (60).

4. The manufacturing method according to claim 1, wherein the step (S103) of peeling includes collecting hydrogen generated by the contact between the negative electrode (60), and the water.

5. The manufacturing method according to claim 1, wherein the step (S103) of peeling includes collecting lithium hydroxide generated by the contact between the negative electrode (60), and the water.

6. The manufacturing method according to claim 1, wherein the step (S101) of preparing the lithium ion secondary battery (100) includes checking whether a potential of the negative electrode (60), of the lithium ion secondary battery (100) is 180 mV or less based on lithium metal.

7. The manufacturing method according to claim 1, wherein the step (S101) of preparing the lithium ion secondary battery (100) includes adjusting a state of charge of the lithium ion secondary battery (100) so that the stage structure of the graphite becomes at least one stage selected from the group consisting of the stage 1, the stage 2, and the stage 3.

8. The manufacturing method according to claim 1, wherein the step (S101) of preparing the lithium ion secondary battery (100) includes collecting a used lithium ion secondary battery (100) or an unused lithium ion secondary battery (100) that is not shipped because of being regarded as a defective product in manufacture.
